(19) Europäisches Patentamt
European Patent Office
Office européen des brevets

(11) **EP 4 776 220 A1**

(12) **EUROPEAN PATENT APPLICATION**

(43) Date of publication:
**15.07.2026 Bulletin 2026/29**

(21) Application number: **25227762.9**

(22) Date of filing: **30.12.2025**

(51) International Patent Classification (IPC):
***G06T 7/00*** *(2017.01)*

(52) Cooperative Patent Classification (CPC):
**G06T 7/00;** G06T 7/0004; G06T 7/248;
G06T 2207/20021; G06T 2207/30242

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.01.2025 IN 202511002336**

(71) Applicant: Honeywell International Inc.
**Charlotte, NC 28202 (US)**

(72) Inventors:
- **JOSEPH, Jeslin Paul**
  **Charlotte, 28202 (US)**
- **SUBRAMANIAN, Hariprasath**
  **Charlotte, 28202 (US)**
- **KUMAR, Anurag**
  **Charlotte, 28202 (US)**

(74) Representative: **Haseltine Lake Kempner LLP**
**Cheapside House**
**138 Cheapside**
**London EC2V 6BJ (GB)**

(54) **METHODS, APPARATUSES AND COMPUTER PROGRAM PRODUCTS FOR ENHANCING ACCURACY IN IMAGE PROCESSING AND ANALYTICS**

(57) Methods, apparatuses and computer program products for enhancing accuracy in image processing and analytics are provided. For example, an example method includes receiving an image data object and a target object maximum pixel size parameter associated with a target object; generating a plurality of pixel chunks based at least in part on the image data object and the target object maximum pixel size parameter; generating a plurality of predicted individual target object counts based at least in part on parallel processing of the plurality of pixel chunks; and generating a predicted total target object count associated with the target object based at least in part on the plurality of predicted individual target object counts.

FIG. 1

EP 4 776 220 A1

Description

BACKGROUND OF THE INVENTION

Applicant has identified many technical challenges and difficulties associated with image processing and analytics.

SUMMARY OF THE INVENTION

Various embodiments described herein relate to methods, apparatuses, and computer program products for enhancing accuracy in image processing and analytics.

In accordance with various embodiments of the present disclosure, an apparatus is provided. In some embodiments, the apparatus comprises at least one processor and at least one non-transitory memory comprising program code. In some embodiments, the at least one non-transitory memory and the program code are configured to, with the at least one processor, cause the apparatus to receive an image data object and a target object maximum pixel size parameter associated with a target object; generate a plurality of pixel chunks based at least in part on the image data object and the target object maximum pixel size parameter; generate a plurality of predicted individual target object counts based at least in part on parallel processing of the plurality of pixel chunks; and generate a predicted total target object count associated with the target object based at least in part on the plurality of predicted individual target object counts. In some embodiments, the target object maximum pixel size parameter defines a target object maximum pixel width and a target object maximum pixel height.

In some embodiments, prior to generating the plurality of pixel chunks, the at least one non-transitory memory and the program code are configured to, with the at least one processor, cause the apparatus to determine a pixel chunk count associated with the plurality of pixel chunks.

In some embodiments, the at least one non-transitory memory and the program code are configured to, with the at least one processor, cause the apparatus to determine a pixel chunk width associated with the plurality of pixel chunks based at least in part on the pixel chunk count and the target object maximum pixel width.

In some embodiments, the at least one non-transitory memory and the program code are configured to, with the at least one processor, cause the apparatus to determine a pixel chunk height associated with the plurality of pixel chunks based at least in part on the pixel chunk count and the target object maximum pixel height.

In some embodiments, the plurality of pixel chunks comprises horizontally adjacent pixel chunks sharing an overlapping pixel portion. In some embodiments, an overlapping pixel portion width of the overlapping pixel portion is determined based on the target object maximum pixel width.

In some embodiments, the plurality of pixel chunks comprises vertically adjacent pixel chunks sharing an overlapping pixel portion. In some embodiments, an overlapping pixel portion height of the overlapping pixel portion is determined based on the target object maximum pixel height.

In accordance with various embodiments of the present disclosure, a computer-implemented method is provided. In some embodiments, the computer-implemented method comprises receiving, by a processor, an image data object and a target object maximum pixel size parameter associated with a target object; generating, by the processor, a plurality of pixel chunks based at least in part on the image data object and the target object maximum pixel size parameter; generating, by the processor, a plurality of predicted individual target object counts based at least in part on parallel processing of the plurality of pixel chunks; and generating, by the processor, a predicted total target object count associated with the target object based at least in part on the plurality of predicted individual target object counts. In some embodiments, the target object maximum pixel size parameter defines a target object maximum pixel width and a target object maximum pixel height.

In some embodiments, prior to generating the plurality of pixel chunks, the computer-implemented method comprises determining a pixel chunk count associated with the plurality of pixel chunks.

In some embodiments, the computer-implemented method further comprises determining, by the processor, a pixel chunk width associated with the plurality of pixel chunks based at least in part on the pixel chunk count and the target object maximum pixel width.

In some embodiments, the computer-implemented method further comprises determining, by the processor, a pixel chunk height associated with the plurality of pixel chunks based at least in part on the pixel chunk count and the target object maximum pixel height.

In accordance with various embodiments of the present disclosure, a computer program product is provided. In some embodiments, the computer program product comprises at least one non-transitory computer-readable storage medium having computer-readable program code portions stored therein. In some embodiments, the computer-readable program code portions comprise an executable portion configured to receive an image data object and a target object maximum pixel size parameter associated with a target object; generate a plurality of pixel chunks based at least in part on the image data object and the target object maximum pixel size parameter; generate a plurality of predicted individual target object counts based at least in part on parallel processing of the plurality of pixel chunks; and generate a predicted total target object count associated with the target object based at least in part on the plurality of predicted individual target object counts. In some embodiments, the target object maximum pixel size parameter defines a target object maximum pixel width and a target object maximum pixel height.

In some embodiments, prior to generating the plurality of pixel chunks, the computer-readable program code portions comprise the executable portion configured to determine a pixel chunk count associated with the plurality of pixel chunks.

In some embodiments, the computer-readable program code portions comprise the executable portion configured to determine a pixel chunk width associated with the plurality of pixel chunks based at least in part on the pixel chunk count and the target object maximum pixel width.

In some embodiments, the computer-readable program code portions comprise the executable portion configured to determine a pixel chunk height associated with the plurality of pixel chunks based at least in part on the pixel chunk count and the target object maximum pixel height.

The foregoing illustrative summary, as well as other exemplary objectives and/or advantages of the disclosure, and the manner in which the same are accomplished, are further explained in the following detailed description and its accompanying drawings.

## BRIEF DESCRIPTION OF DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein.

FIG. 1 illustrates an example image in accordance with some embodiments of the present disclosure.
FIG. 2 illustrates an example apparatus in accordance with some embodiments of the present disclosure.
FIG. 3 illustrates example methods in accordance with some embodiments of the present disclosure.
FIG. 4A illustrates a plurality of pixel elements associated with an example image data object in accordance with some embodiments of the present disclosure.
FIG. 4B and FIG. 4C illustrate a plurality of pixel chunks associated with the example image data object shown in FIG. 4A in accordance with some embodiments of the present disclosure.
FIG. 5A and FIG. 5B illustrate example methods in accordance with some embodiments of the present disclosure.
FIG. 6A illustrates an example image data object in accordance with some embodiments of the present disclosure.
FIG. 6B and FIG. 6C illustrate a plurality of pixel chunks associated with the example image data object shown in FIG. 6A in accordance with some embodiments of the present disclosure.

## DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

Overview

With the development of modem imaging technology, resolutions of imaging sensors have increased drastically. For example, high-resolution imaging sensors (such as, but not limited to, those found in smartphones, digital cameras, scientific equipment, and/or the like) are capable of capturing images with millions of pixels (such as, but not limit to, 8 megapixels (MP), 16 MP, 64 MP, 128 MP, etc.). High-resolution imaging sensors are often implemented to capture image feeds and/or video feeds, which are further processed (for example, by artificial intelligent systems) to extract data and/or information.

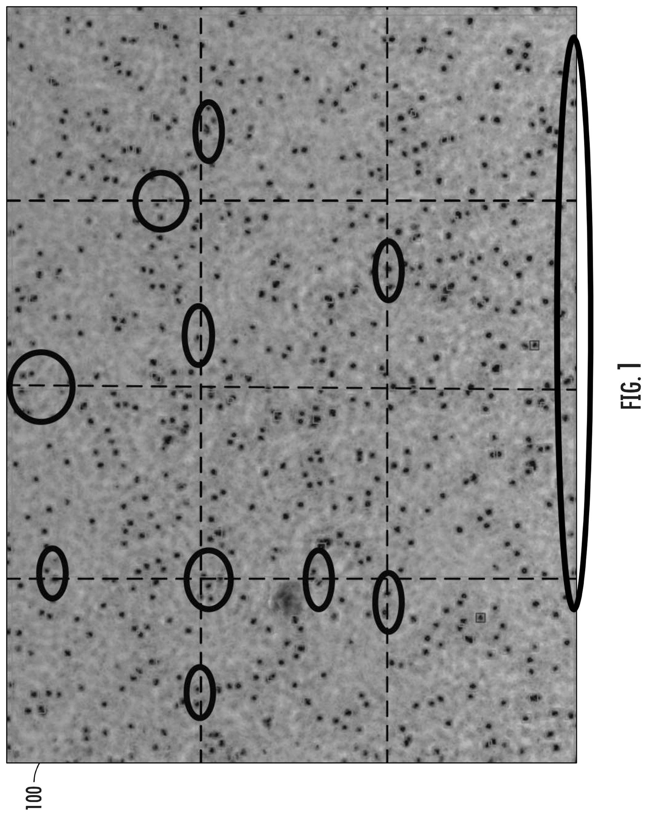

Applicant has identified many technical challenges and difficulties associated with image processing and analytics. For example, the more pixels that an image has, the larger the file size of the image. For example, an image captured by a 16 MP color camera may have a file size around 48 megabytes, while an image captured by a 64 MP color camera may have a file size around 200 megabytes. Many methods and systems of processing and analyzing large image files are plagued with technical limitations. Referring now to FIG. 1, an example image 100 is illustrated.

In the example shown in FIG. 1, the example image 100 may be captured by a high-resolution imaging sensor to estimate the number of target objects (for example, the black dots in the example image 100). However, estimates of the number of target objects in an image produced by many methods and systems are often inaccurate due to factors such as, but not limited to, variations of sizes of the target object and large amount of computing resource (such as, but not limited to, CPU, GPU, memory/RAM, etc.) that is required to process large size image files.

For example, some methods use a binning (or resizing) approach in image processing and analytics. Based on such methods, the example image 100 is resized into an image having a smaller resolution using the binning method (e.g., averaging pixels that are adjacent to one another). For example, a 2 by 2 binning method may reduce 4 pixels into 1 pixel, a 4 by 4 binning method binning method may reduce 16 pixels into 1 pixel, and/or the like. In such an example, the example image 100 may be reduced to 0.5 MP (e.g. 640 by 40), 1 MP (1280 by 720, HD) or 2 MP (1920 by 1080, full HD). While computing resource required for processing a smaller size image is less than that is required for processing a larger size image, the resized image often lack details due to the lower resolution. As a result, image / video analytics based on the binning approach often produce inaccurate results (for example, inaccurate estimate of number of target objects in the example image 100).

Some methods use a specific region of interest (ROI) approach in image processing and analytics. Based on such methods, one or more ROIs in the example image 100 are selected (for example, by a user), and only the selected ROIs are cropped for processing and analytics. Because there is no binning or resizing, details of the example image 100 in the ROIs are preserved for image processing and analytics. However, if the target object is not in the selected ROIs, such details are missed during image processing and analytics. For example, when one or more target objects in the example image 100 do not fall under one of the selected ROIs, such methods do not count these target objects, and therefore resulting in inaccurate estimates of the number of target objects in the example image 100.

Some methods use a cropping approach in image processing and analytics. Based on such methods, the example image 100 is split into multiple smaller, cropped regions, each of which is separately processed and/or analyzed. In the example shown in FIG. 1, the example image 100 is split into a plurality of cropped regions divided by the dash lines. Because there is no binning or resizing, details of the example image 100 are preserved in each smaller image. However, if one or more target objects fall between two or more cropped regions, such methods are not able to accurately identify, process or analyze these target objects. In the example shown in FIG. 1, the circles highlight many target objects that fall between cropped regions. When processing these cropped regions, such methods are not able to detect those target objects that are between cropped regions. As a result, estimates of number of target objects by such methods are often inaccurate.

Various embodiments of the present disclosure overcome these technical challenges and difficulties, and provide various technical improvements and advantages. For example, various embodiments of the present application provide example methods and apparatus for splitting an image into a plurality of pixel chunks based on the maximum pixel size of the target object (which may be set as a configuration parameter in the algorithm). In some embodiments, some of the plurality of pixel chunks share overlapping pixel portions. As a result, various embodiments of the present disclosure avoid missing target objects that fall between pixel chunks and improve accuracy of estimating the number of objects in the image. In some embodiments, the plurality of pixel chunks is processed and/or analyzed in parallel (for example, based on the available CPU/GPU cores), therefore increasing the speed of image processing and analytics. In some embodiments, reconstruction algorithms are applied after parallel processing so as to eliminate duplicate detections of the target objects among pixel chunks and improve the accuracy of predicting the number of target objects in an image. Additional details are described herein.

Definitions

In the present disclosure, the term "image data object" refers to a structured representation of data and/or information associated with a digital image that a computing device (such as, but not limited to, processors, controller, and/or the like) may store, process, analyze, an/or the like. For example, an example image data object in accordance with some embodiments of the present disclosure may comprise visual properties associated with the image (such as, but not limited to, contrast, color, and/or the like). Additionally, or alternatively, an example image data object may comprise metadata associated with the image. In some embodiments, an example image data object may be rendered on a display (such as, but not limited to, a computer screen). In some embodiments, a computing device may perform image processing and/or analytics based on the image data object, additional details of which are described herein.

In some embodiments, an example image data object comprises a plurality of pixel elements. In the present disclosure, the term "pixel element" refers to a self-contained unit of an example image data object that comprises a single point of image data. In some embodiments, an example pixel element is the smallest unit in an example image data object.

In some embodiments, pixel elements of an example image data object are arranged in a grid format including rows and columns. In such examples, each pixel element of the example image data object can be located based on the row and column numbers.

In the present disclosure, the term "height direction" refers to a vertical direction in the example image data object. For example, the height direction may be from top to bottom of the example image data object. In examples where the pixel elements are arranged in the grid format comprising rows and columns, the height direction is parallel to the columns of the grid.

In the present disclosure, the term "width direction" refers to a horizontal direction in the example image data object. For example, the horizontal direction may be from left to right of the example image data object. In examples where the pixel elements are arranged in the grid format comprising rows and columns, the height direction is parallel to the rows of the grid.

In the present disclosure, the term "image resolution parameter" refers to a parameter that describes and/or indicates the total number of pixels associated with an image data object. In some embodiments, the image resolution parameter may be represented in the form of a product of the image width and the image heigh in pixels.

Additional details associated with image data object and pixel element are described herein.

In the present disclosure, the term "pixel chunk" refers to one or more portions of an example image data object that are split or segmented from the example image data object. For example, an example pixel chunk in accordance with some embodiments of the present disclosure may comprise a plurality of pixel elements from a continuous portion of an example image data object. In the present disclosure, the term "pixel chunk count" refers to a number of pixel chunks that are split or segmented from an example image data object.

In some embodiments, the pixel elements of an example pixel chunk may be similarly arranged in a grid format comprising rows and columns.

In the present disclosure, the term "pixel chunk height" refers to a length of an example pixel chunk in the height direction. For example, a pixel chunk height of the example pixel chunk may be represented in the form of a number of pixel elements in the height direction of the pixel chunk (e.g., from top to bottom of the pixel chunk). In examples where pixel elements in the pixel chunk are arranged in the grid format, the pixel chunk height corresponds to the number of rows of pixel elements in the pixel chunk.

In the present disclosure, the term "pixel chunk width" refers to a length of an example pixel chunk in the width direction. For example, a pixel chunk width of the example pixel chunk may be represented in the form of a number of pixel elements in the width direction of the pixel chunk (e.g., from left to right of the pixel chunk). In examples where pixel elements in the pixel chunk are arranged in the grid format, the pixel chunk width corresponds to the number of columns of pixel elements in the pixel chunk.

In the present disclosure, the term "overlapping pixel portion" refers to one or more portions of an example image data object that are shared between two or more pixel chunks. For example, pixel elements of an example image data object may be segmented into a first pixel chunk and a second pixel chunk, in which the first pixel chunk and the second pixel chunk share an overlapping pixel portion. In such an example, both the first pixel chunk and the second pixel chunk comprise the overlapping pixel portion.

For example, two pixel chunks of an image data object may be horizontally adjacent pixel chunks that share an overlapping pixel portion. Additionally, or alternatively, two pixel chunks of an image data object may be vertically adjacent pixel chunks that share an overlapping pixel portion. Additionally, or alternatively, more than two pixel chunks of an image data object may be adjacent pixel chunks that share an overlapping pixel portion.

In the present disclosure, the term "overlapping pixel portion height" refers to a length of an example overlapping pixel portion in the height direction. For example, an overlapping pixel portion height of the example overlapping pixel portion may be represented in the form of a number of pixel elements in the height direction of the overlapping pixel portion (e.g., from top to bottom of the overlapping pixel portion). In examples where pixel elements in the overlapping pixel portion are arranged in the grid format, the overlapping pixel portion height corresponds to the number of rows of pixel elements in the overlapping pixel portion.

In the present disclosure, the term "overlapping pixel portion width" refers to a length of an example overlapping pixel portion in the width direction. For example, an overlapping pixel portion width of the example overlapping pixel portion may be represented in the form of a number of pixel elements in the width direction of the overlapping pixel portion (e.g., from left to right of the overlapping pixel portion). In examples where pixel elements in the overlapping pixel portion are arranged in the grid format, the overlapping pixel portion width corresponds to the number of columns of pixel elements in the overlapping pixel portion.

In the present disclosure, the term "target object" refers to one or more items or entities that one or more imaging processing and/or analytics algorithms aim to identify, analyze, extract, and/or the like from an example image data object. For example, in the context of facial recognition system, an example target object may be in the form of a human face. As another example, in the context of medical imaging, an example target object may be in the form of white blood cells.

In the present disclosure, the term "target object maximum pixel size parameter" refers to a parameter that indicates a maximum image dimension of a target object in an example image data object as measured by the number of pixels. As described above, an example target object in accordance with some embodiments of the present disclosure may have variations in sizes. Continuing from the examples above, human faces (and white blood cells) have variations in sizes. As such, a target object maximum pixel size parameter indicates a maximum size of the target object (or the biggest target object) that the one or more imaging processing and/or analytics algorithms aim to identify, analyze, extract, and/or the like.

In some embodiments, an example target object maximum pixel size parameter may be defined based a target object maximum pixel width and a target object maximum pixel height.

In the present disclosure, the term "target object maximum pixel height" refers to a maximum height of an example target object in an example image data object as measured by the number of pixels. For example, a target object maximum pixel height of the example target object may be represented in the form of a number of pixel elements in the height direction of the example target object (e.g., from top to bottom). In examples where pixel elements associated with the example target object are arranged in the grid format, the target object maximum pixel height corresponds to the maximum number of rows of pixel elements associated with the target object.

In the present disclosure, the term "target object maximum pixel width" refers to a maximum width of an example target object in an example image data object as measured by the number of pixels. For example, a target object maximum pixel width of the example target object may be represented in the form of a number of pixel elements in the width direction of the example target object (e.g., from left to right). In examples where pixel elements associated with the example target object are arranged in the grid format, the target object maximum pixel width corresponds to the maximum number of columns of pixel elements associated with the target object.

In the present disclosure, the term "predicted individual target object count" refers to an estimated number of target objects in an example pixel chunk. In some embodiments, a predicted individual target object count associated with the example pixel chunk may be generated based on implementing one or more image recognition and/or classification algorithms such as, but not limited to, machine learning models (such as, but not limited to, convolutional neural networks (CNNs), artificial neural networks, and/or the like).

In the present disclosure, the term "predicted total target object count" refers to an estimated total number of target objects in an image data object. In some embodiments, an example predicted total target object count may be generated based at least in part on the plurality of predicted individual target object counts and the plurality of pixel chunks, additional details of which are described herein.

Example Apparatuses for Implementing Embodiments of the Present Disclosure

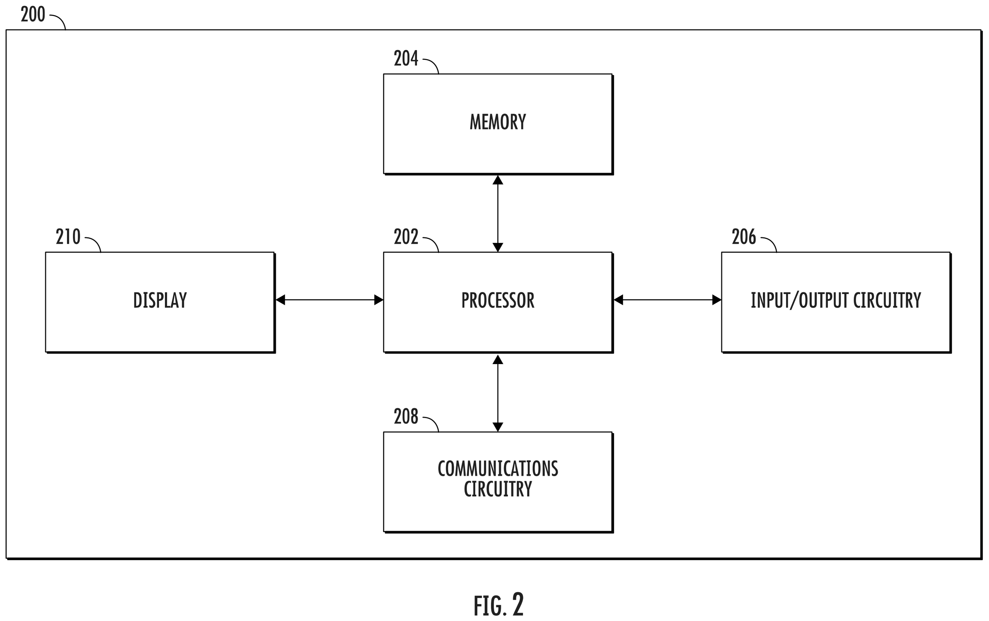

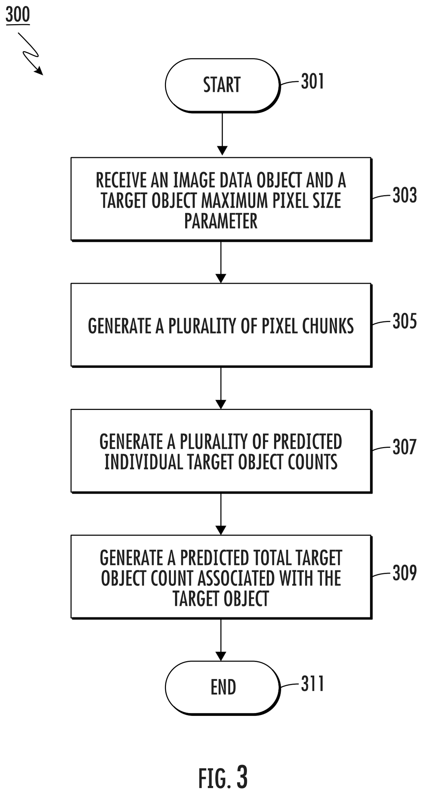

Referring now to FIG. 2, an example block diagram illustrates example components of an example apparatus 200 in accordance with some embodiments of the present disclosure. In some embodiments, the example apparatus 200 may carry out the example methods described herein, including, but not limited to, those described in connection with at least FIG. 3 to FIG. 6C.

In some embodiments, the apparatus 200 may be configured to execute at least some of the operations described herein. In some embodiments, the apparatus 200 may include a processor 202, a memory 204, an input/output circuitry 206, a communications circuitry 208, and/or a display 210.

Although the processor 202, the memory 204, the input/output circuitry 206, the communications circuitry 208, and the display 210 may be described with respect to their functions, it should be understood that the particular implementations necessarily include the use of particular hardware. It should also be understood that certain of the processor 202, the memory 204, the input/output circuitry 206, the communications circuitry 208, and/or the display 210 may include similar or common hardware. For example, two sets of circuitries may both leverage use of the same processor, network interface, storage medium, or the like to perform their associated functions, such that duplicate hardware is not required for each set of circuitries.

In some embodiments, the apparatus 200 may be configured to execute the operations described herein. Although the components are described with respect to functional limitations, it should be understood that the particular implementations necessarily include the use of particular hardware. It should also be understood that certain of the components described herein may include similar or common hardware. For example, two sets of circuitries may both leverage use of the same processor, network interface, storage medium, or the like to perform their associated functions, such that duplicate hardware is not required for each set of circuitries. The use of the term "circuitry" as used herein with respect to components of the apparatus should therefore be understood to include particular hardware configured to perform the functions associated with the particular circuitry as described herein.

In some embodiments, the processor 202 (and/or co-processor or any other processing circuitry assisting or otherwise associated with the processor) may be in communication with the memory 204 via a bus for passing information among components of the apparatus. In some embodiments, the memory 204 is non-transitory and may include, for example, one or more volatile and/or non-volatile memories. In some embodiments, for example, the memory 204 may be an electronic storage device (e.g., a computer readable storage medium). In some embodiments, the memory 204 may be configured to store information, data, content, applications, instructions, or the like, for enabling the apparatus 200 to carry out various functions in accordance with example embodiments of the present disclosure.

In some embodiments, the processor 202 may be embodied in a number of different ways and may, for example, include one or more processing devices configured to perform independently. Additionally, or alternatively, the processor 202 may include one or more processors configured in tandem via a bus to enable independent execution of instructions, pipelining, and/or multithreading. In some embodiments, the use of the term "processing circuitry" may be understood to include a single core processor, a multi-core processor, multiple processors internal to the apparatus, and/or remote or "cloud" processors.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, the processor may represent an entity (e.g., physically embodied in circuitry) capable of performing operations according to an embodiment of the present disclosure while configured accordingly. Alternatively, as another example, when the processor 202 is embodied as an executor of software instructions, the instructions may specifically configure the processor to perform the algorithms and/or operations described herein when the instructions are executed.

In some embodiments, the apparatus 200 may include the input/output circuitry 206 that may, in turn, be in communication with the processor 202 to provide output to the user and, in some embodiments, to receive an indication of a user input. The input/output circuitry 206 may comprise a user interface circuitry and may include a display, which may comprise a web user interface, a mobile application, a user computing device, a kiosk, or the like. In some embodiments, the input/output circuitry 206 may also include a keyboard, a mouse, a joystick, a touch screen, touch areas, soft keys, a microphone, a speaker, or other input/output mechanisms. In some embodiments, the processor and/or user interface circuitry comprising the processor may be configured to control one or more functions of one or more user interface elements through computer program instructions (e.g., software and/or firmware) stored on a memory accessible to the processor (e.g., the memory 204, and/or the like).

In some embodiments, the apparatus 200 may include the display 210 that may, in turn, be in communication with the processor 202 to display renderings of various user interfaces. In various examples of the present disclosure, the display 210 may include a liquid crystal display (LCD), a light-emitting diode (LED) display, a plasma (PDP) display, a quantum dot (QLED) display, and/or the like.

In some embodiments, the communications circuitry 208 may be any means such as a device or circuitry embodied in either hardware or a combination of hardware and software that is configured to receive and/or transmit data from/to a network and/or any other device, circuitry, or module in communication with the apparatus 200. In this regard, the communications circuitry 208 may include, for example, a network interface for enabling communications with a wired or wireless communication network. For example, the communications circuitry 208 may include one or more network interface cards, antennae, buses, switches, routers, modems, and supporting hardware and/or software, or any other device suitable for enabling communications via a network. Additionally, or alternatively, the communication interface may include the circuitry for interacting with the antenna(s) to cause transmission of signals via the antenna(s) or to handle receipt of signals received via the antenna(s).

Example Methods for Implementing Embodiments of the Present Disclosure

Various example methods described herein, including, for example, those as shown in FIG. 3 to FIG. 6C, may provide various technical advantages and/or improvements described above.

It is noted that each block of the flowchart, and combinations of blocks in the flowchart, may be implemented by various means such as hardware, firmware, circuitry and/or other devices associated with execution of software including one or more computer program instructions. For example, one or more of the methods described in FIG. 3 to FIG. 6C may be embodied by computer program instructions, which may be stored by a non-transitory memory of an apparatus employing an embodiment of the present disclosure and executed by a processor in the apparatus. These computer program instructions may direct a computer or other programmable apparatus to function in a particular manner, such that the instructions stored in the computer-readable storage memory produce an article of manufacture, the execution of which implements the function specified in the flowchart block(s).

As described above and as will be appreciated based on this disclosure, embodiments of the present disclosure may be configured as methods, mobile devices, backend network devices, and the like. Accordingly, embodiments may comprise various means including entirely of hardware or any combination of software and hardware. Furthermore, embodiments may take the form of a computer program product on at least one non-transitory computer-readable storage medium having computer-readable program instructions (e.g., computer software) embodied in the storage medium. Similarly, embodiments may take the form of a computer program code stored on at least one non-transitory computer-readable storage medium. Any suitable computer-readable storage medium may be utilized including non-transitory hard disks, CD-ROMs, flash memory, optical storage devices, or magnetic storage devices.

It is noted that each block of the flowchart, and combinations of blocks in the flowchart, may be implemented by various means such as hardware, firmware, circuitry and/or other devices associated with execution of software including one or more computer program instructions. For example, one or more of the methods described in FIG. 3 to FIG. 6C may be embodied by computer program instructions, which may be stored by a non-transitory memory of an apparatus employing an embodiment of the present disclosure and executed by a processor in the apparatus. These computer program instructions may direct a computer or other programmable apparatus to function in a particular manner, such that the instructions stored in the computer-readable storage memory produce an article of manufacture, the execution of which implements the function specified in the flowchart block(s).

As described above and as will be appreciated based on this disclosure, embodiments of the present disclosure may be configured as methods, mobile devices, backend network devices, and the like. Accordingly, embodiments may comprise various means including entirely of hardware or any combination of software and hardware. Furthermore, embodiments may take the form of a computer program product on at least one non-transitory computer-readable storage medium having computer-readable program instructions (e.g., computer software) embodied in the storage medium. Similarly, embodiments may take the form of a computer program code stored on at least one non-transitory computer-readable storage medium. Any suitable computer-readable storage medium may be utilized including non-transitory hard disks, CD-ROMs, flash memory, optical storage devices, or magnetic storage devices.

Referring now to FIG. 3, a flow diagram illustrating example methods in accordance with some embodiments of the present disclosure is illustrated. In particular, example methods illustrated in FIG. 3 provide technical benefits and improvements such as, but not limited to, enhancing accuracy in detecting the number of target objects in an image data object and improving speed of image processing and analytics.

In the example shown in FIG. 3, an example method 300 starts at step/operation 301 and then proceeds to step/operation 303. At step/operation 303, in some embodiments, a processing circuitry (such as, but not limited to, the processor 202 of the apparatus 200 described in connection with at least FIG. 2) receives an image data object and a target object maximum pixel size parameter associated with a target object.

In some embodiments, the image data object and/or the target object maximum pixel size parameter associated with the target object may be received from a user computing device (such as, but not limited to, a personal computer, a tablet, a smartwatch, and/or the like). In some embodiments, the image data object and/or the target object maximum pixel size parameter associated with the target object may be received from a database (such as, but not limited to, a cloud-based database, a local database, and/or the like). In some embodiments, the image data object and/or the target object maximum pixel size parameter associated with the target object may be received from other data sources.

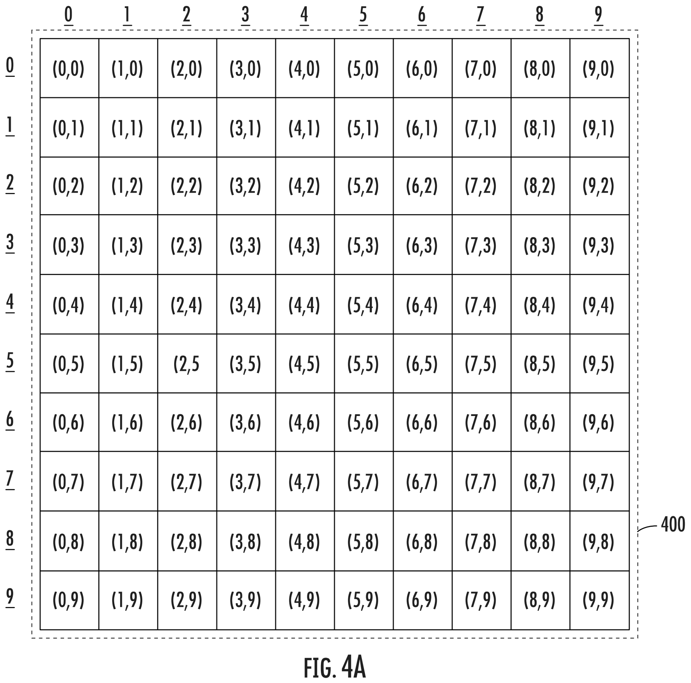

As described above, an example image data object may comprise a plurality of pixel elements that is arranged in a grid format comprising rows and columns. Referring now to FIG. 4A, a plurality of pixel elements associated with an example image data object 400 is illustrated. In the example shown in FIG. 4A, the example image data object 400 has a size of 10 pixels by 10 pixels. In other words, the plurality of pixel elements of the example image data object 400 is arranged in the gird format that comprises 10 rows and 10 columns. As shown in FIG. 4A, each pixel element of the example image data object can be located or identified based on its corresponding row number and column number.

Referring back FIG. 3, the target object maximum pixel size parameter may indicate a maximum pixel size of a target object in the example image data object. As described above, target object refers to items or entities that imaging processing and/or analytics algorithms aim to identify, analyze, extract from an example image data object, and size of the target object may vary. For example, the target object may be white blood cell. In such an example, imaging processing and/or analytics algorithms may aim to estimate the number of white blood cells from the example image data object (while sizes of different white blood cells may be different).

In some embodiments, the target object maximum pixel size parameter defines a target object maximum pixel width and a target object maximum pixel height. For example, the target object maximum pixel size parameter may be 2 pixels by 2 pixels. In such an example, the target object maximum pixel width is 2 pixels (e.g., the maximum width of the target object is 2 pixels), and the target object maximum pixel height is also 2 pixels (e.g., the maximum height of the target object is 2 pixels).

Continuing from the white blood cell example above, the imaging processing and/or analytics algorithms may aim to detect white blood cells in the image data object that are not larger than 2 pixels by 2 pixels. In such an example, the imaging processing and/or analytics algorithms may detect white blood cells having sizes of 1 pixel by 1 pixel, 1 pixel by 2 pixels, 2 pixels by 1 pixel, and/or 2 pixels by 2 pixels. The imaging processing and/or analytics algorithms do not detect white blood cells that are larger than 2 pixels by 2 pixels in the image data object.

Referring back to FIG. 3, in some embodiments, subsequent and/or in response to step/operation 303, the example method 300 proceeds to step/operation 305. At step/operation 305, in some embodiments, a processing circuitry (such as, but not limited to, the processor 202 of the apparatus 200 described in connection with at least FIG. 2) generates a plurality of pixel chunks.

As described above, an example pixel chunk may be a portion of an example image data object that is split or segmented from the example image data. In some embodiments, the processing circuitry may generate the plurality of pixel chunks based at least in part on the image data object and the target object maximum pixel size parameter received at step/operation 303.

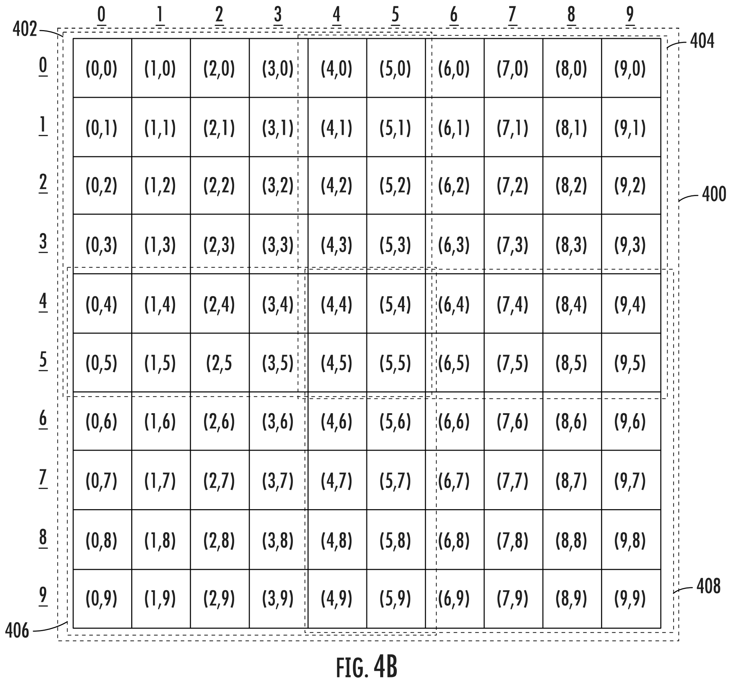

For example, the processing circuitry may segment the plurality of pixel elements of the image data object into the plurality of pixel chunks. In some embodiments, the plurality of pixel chunks may comprise pixel chunks that are adjacent to one another (for example, in the height direction or in the width direction) and share an overlapping pixel portion. In such an example, the size of the overlapping pixel portion may be determined based on the target object maximum pixel size parameter received at step/operation 303. Referring now to FIG. 4B, a plurality of pixel chunks associated with the example image data object 400 shown in FIG. 4A is illustrated.

In some embodiments, prior to generating the plurality of pixel chunks, the processing circuitry may determine a pixel chunk count that indicates the number of pixel chunks to be segmented from the image data object. In the example shown in FIG. 4B, the processing circuitry may determine the pixel chunk count to be 4. In such an example, the processing circuitry generate 4 pixel chunks from the example image data object 400.

In some embodiments, each of the plurality of pixel chunks has the same size. In such examples, each pixel chunk has the same pixel chunk width and the same pixel chunk height as those of another pixel chunk. In some embodiments, the processing circuitry may generate the plurality of pixel chunks by determining the pixel chunk width and the pixel chunk height associated with the plurality of pixel chunks.

In some embodiments, the processing circuitry may determine the pixel chunk width associated with the plurality of pixel chunks based at least in part on the pixel chunk count and the target object maximum pixel width. For example, the processing circuitry may determine the pixel chunk width based on the following algorithm:

$$f_W = \left( \frac{s_W}{\frac{N}{2}} \right) + \left( \frac{t_w}{2} \right)$$

In the above algorithm, $f_W$ corresponds to the pixel chunk width of each pixel chunk, $s_W$ corresponds to the image width (in pixels) of the image data object, $N$ corresponds to the pixel chunk count associated with the pixel chunks, and $t_w$ corresponds to the target object maximum pixel width. In some embodiments, the pixel chunk count $N$ and the target object maximum pixel width $t_w$ are configurable parameters in the above algorithm.

In the example shown in FIG. 4B, image width $s_W$ equals 10. Assuming the target object maximum pixel width $t_w$ equals 2, the pixel chunk width $f_W$ can be determined as follows:

$$f_W = \left(\frac{s_W}{\frac{N}{2}}\right) + \left(\frac{t_w}{2}\right) = \left(\frac{10}{\frac{4}{2}}\right) + \left(\frac{2}{2}\right) = 5 + 1 = 6$$

In some embodiments, the processing circuitry may determine the pixel chunk height associated with the plurality of pixel chunks based at least in part on the pixel chunk count and the target object maximum pixel height. For example, the processing circuitry may determine the pixel chunk height based on the following algorithm:

$$f_H = \left(\frac{s_H}{\frac{N}{2}}\right) + (\frac{t_H}{2})$$

In the above algorithm, $f_H$ corresponds to the pixel chunk height of each pixel chunk, $s_H$ corresponds to the image height (in pixels) of the image data object, $N$ corresponds to the pixel chunk count associated with the plurality of pixel chunks, and $t_H$ corresponds to the target object maximum pixel height. In some embodiments, the pixel chunk count N and the target object maximum pixel height $t_H$ are configurable parameters in the above algorithm.

In the example shown in FIG. 4B, image height $s_H$ equals 10. Assuming the target object maximum pixel height $t_H$ equals 2, the pixel chunk width $f_H$ can be determined as follows:

$$f_H = \left(\frac{s_H}{\frac{N}{2}}\right) + \left(\frac{t_H}{2}\right) = \left(\frac{10}{\frac{4}{2}}\right) + \left(\frac{2}{2}\right) = 5 + 1 = 6$$

In the example illustrated above, the processing circuitry segments the plurality of pixel elements of the image data object into 4 pixel chunks according to the pixel chunk count. Each pixel chunk has a pixel chunk width of 6 pixels and a pixel chunk height of 6 pixels. As shown in FIG. 4B, the processing circuitry segments the plurality of pixel elements of the example image data object 400 into a pixel chunk 402, a pixel chunk 404, a pixel chunk 406, and a pixel chunk 408. Each of the pixel chunk 402, the pixel chunk 404, the pixel chunk 406, and the pixel chunk 408 has the same size of 6 by 6 pixels.

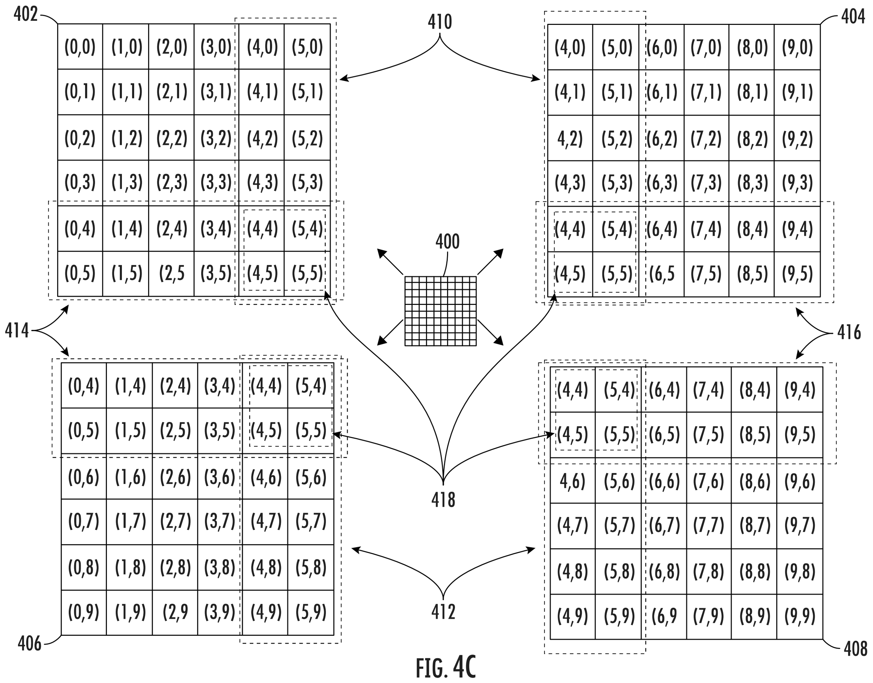

In some embodiments, one of the plurality of pixel chunks may be adjacent horizontally or vertically to another of the plurality of pixel chunks. As shown in FIG. 4B, the plurality of pixel chunks comprises horizontally adjacent pixel chunks in the width direction of the image data object 400 (such as the pixel chunk 402 and the pixel chunk 404). Additionally, or alternatively, the plurality of pixel chunks comprises vertically adjacent pixel chunks in the height direction of the image data object 400 (such as the pixel chunk 402 and the pixel chunk 406). FIG. 4C further highlights segmenting the image data object 400 into the pixel chunk 402, the pixel chunk 404, the pixel chunk 406, and the pixel chunk 408.

In some embodiments, horizontally adjacent pixel chunks share an overlapping pixel portion that has an overlapping pixel portion width corresponding to the target object maximum pixel width. In the example shown in FIG. 4C, the pixel chunk 402 and the pixel chunk 404 are horizontally adjacent pixel chunks and share an overlapping pixel portion 410. The overlapping pixel portion 410 has an overlapping pixel portion width of 2 pixels, which is the same as the target object maximum pixel width. Similarly, the pixel chunk 406 and the pixel chunk 408 are horizontally adjacent pixel chunks and share an overlapping pixel portion 412. The overlapping pixel portion 412 has an overlapping pixel portion width of 2 pixels, which is the same as the target object maximum pixel width.

In some embodiments, vertically adjacent pixel chunks share an overlapping pixel portion that has an overlapping pixel portion height corresponding to the target object maximum pixel height. In the example shown in FIG. 4C, the pixel chunk 402 and the pixel chunk 406 are vertically adjacent pixel chunks and share an overlapping pixel portion 414. The overlapping pixel portion 414 has an overlapping pixel portion height of 2 pixels, which is the same as the target object maximum pixel height. Similarly, the pixel chunk 404 and the pixel chunk 408 are vertically adjacent pixel chunks and share an overlapping pixel portion 416. The overlapping pixel portion 416 has an overlapping pixel portion height of 2 pixels, which is the same as the target object maximum pixel height.

Referring back to FIG. 3, in some embodiments, subsequent and/or in response to step/operation 305, the example method 300 proceeds to step/operation 307. At step/operation 307, in some embodiments, a processing circuitry (such as, but not limited to, the processor 202 of the apparatus 200 described in connection with at least FIG. 2) generates a plurality of predicted individual target object counts.

In some embodiments, each of the plurality of predicted individual target object counts is associated with one the plurality of pixel chunks. Continuing from the example above in which the target object is white blood cells, the processing circuitry may generate a plurality of predicted individual target object counts that each indicates an estimated number of white blood cells shown in one of the plurality of pixel chunks. For example, the processing circuitry may implement one or more image recognition and/or classification algorithms such as, but not limited to, machine learning models (such as, but not limited to, CNNs, artificial neural networks, and/or the like) on each pixel chunk to predict the number of white blood cells shown in each of the pixel chunks.

In some embodiments, the processing circuitry generates the plurality of predicted individual target object counts based at least in part on parallel processing of the plurality of pixel chunks. For example, the processing circuitry may utilize available CPU and/or GPU cores to operate machine learning models on the pixel chunks in parallel, thereby improving the speed of generating predicted individual target object counts.

Referring back to FIG. 3, in some embodiments, subsequent and/or in response to step/operation 307, the example method 300 proceeds to step/operation 309. At step/operation 309, in some embodiments, a processing circuitry (such as, but not limited to, the processor 202 of the apparatus 200 described in connection with at least FIG. 2) generates a predicted total target object count associated with the target object.

In some embodiments, the processing circuitry generates the predicted total target object count associated with the target object based at least in part on the plurality of predicted individual target object counts generated at step/operation 307.

In some embodiments, one or more target objects may be captured in one or more overlapping pixel portions that are shared among adjacent pixel chunks (for example, horizontally adjacent pixel chunks and/or vertically adjacent pixel chunks). As described above in connection with step/operation 307, the processing circuitry may implement image recognition and/or classification algorithms on each pixel chunk in parallel to predict the target object count in each pixel chunk. As such, a target object in an overlapping pixel portion that is shared among adjacent pixel chunks may be counted more than once.

To detect duplicated counting, at step/operation 307, the processing circuitry may implement one or more reconstruction algorithms and reductant detection algorithms when generating the predicted total target object count associated with the target object. In some embodiments, the processing circuitry may generate the predicted total target object count based at least in part on predicted individual target object counts associated with target objects in the pixel chunks and predicted individual target object counts associated with target objects in the overlapping pixel portions among adjacent pixel chunks. As an example in connection with FIG. 4C, the processing circuitry circuity may generate a predicted total target object count associated with the target object based on the following algorithm:

$$P(A \cup B \cup C \cup D)$$
$$= P(A) + P(B) + P(C) + P(D) - P(A \cap B) - P(A \cap C) - P(B \cap D)$$
$$- P(C \cap D) + P(A \cap B \cap C \cap D)$$

In the above algorithm, A corresponds to the pixel chunk 402, B corresponds to the pixel chunk 404, C corresponds to the pixel chunk 406, and D corresponds to the pixel chunk 408. $P(A)$ represents the predicted individual target object count associated with target object(s) in the pixel chunk 402. $P(B)$ represents the predicted individual target object count associated with target object(s) in the pixel chunk 404. $P(C)$ represents the predicted individual target object count associated with target object(s) in the pixel chunk 406. $P(D)$ represents the predicted individual target object count associated with target object(s) in the pixel chunk 408. $P(A \cap B)$ represents the predicted individual target object count associated with target object(s) in the overlapping pixel portion 410 that is shared among the pixel chunk 402 and the pixel chunk 404. $P(A \cap C)$ represents the predicted individual target object count associated with target object(s) in the overlapping pixel portion 414 that is shared among the pixel chunk 402 and the pixel chunk 406. $P(B \cap D)$ represents the predicted individual target object count associated with target object(s) in the overlapping pixel portion 416 that is shared among the pixel chunk 404 and the pixel chunk 408. $P(C \cap D)$ represents the predicted individual target object count associated with target object(s) in the overlapping pixel portion 412 that is shared among the pixel chunk 406 and the pixel chunk 408. $P(A \cap B \cap C \cap D)$ represents the predicted individual target object count associated with target object(s) in the overlapping pixel portion 418 that is shared among the pixel chunk 402, the pixel chunk 404, the pixel chunk 406, and the pixel chunk 408. Additional examples associated with generating the predicted total target object count are described herein.

Referring back to FIG. 3, in some embodiments, subsequent and/or in response to step/operation 309, the example method 300 proceeds to step/operation 311 and ends.

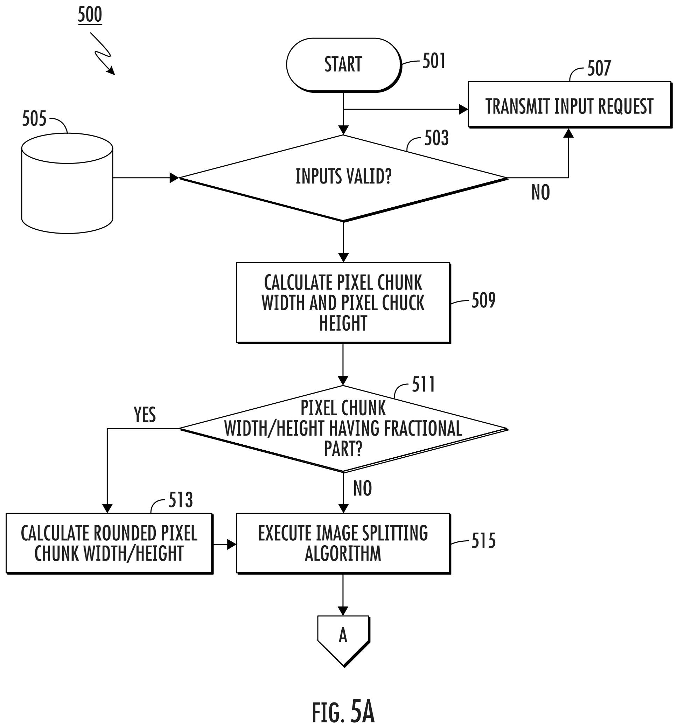

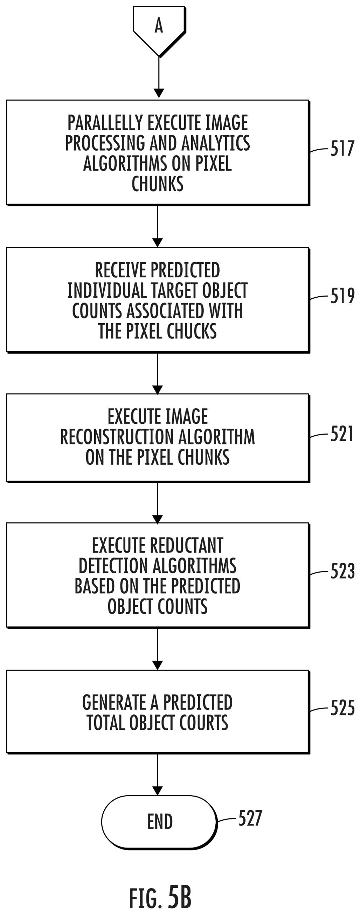

Referring now to FIG. 5A and FIG. 5B, example methods in accordance with some embodiments of the present disclosure are illustrated. In particular, example methods illustrated in FIG. 5A and FIG. 5B provide technical benefits and improvements such as, but not limited to, enhancing accuracy in detecting the number of target objects in an image data object and improving speed of image processing and analytics.

In the example shown in FIG. 5A, an example method 500 starts at step/operation 501 and proceeds to step/operation 503. At step/operation 503, in some embodiments, a processing circuitry (such as, but not limited to, the processor 202 of the apparatus 200 described in connection with at least FIG. 2) determines whether valid inputs are received.

In some embodiments, inputs for the example method 500 may include, but not limited to, an image resolution parameter associated with an image data object, a target object maximum pixel size parameter associated with a target object, and a pixel chunk count.

As described above, the image resolution parameter may indicate the total number of pixels associated with an image data object, and may be represented in the form of the product of the image width and the image height in pixels. For example, the image resolution parameter may be represented as follows:

$$s_W \times s_H$$

In the above example, $s_W$ represents the image width of the image data object in pixel (i.e., the number of pixels along the width direction of the image data object), and $s_H$ represents the image height of the image data object in pixel (i.e., the number of pixels along the height direction of the image data object).

As described above, the target object maximum pixel size parameter refers to a parameter that indicates a maximum image dimension of the target object in the image data object. For example, the target object maximum pixel size parameter may be represented as follows:

$$t_W \times t_H$$

In the above example, $t_W$ represents the target object maximum pixel width, and $t_H$ represents the target object maximum pixel height.

As described above, the pixel chunk count N refers to a parameter that indicates the number of pixel chunks that are split or segmented from the image data object.

In some embodiments, the image data object, the target object maximum pixel size parameter, and/or the pixel chunk count may be retrieved from a database (such as, but not limited to, the database 505 shown in FIG. 5A). In some embodiments, the image data object, the target object maximum pixel size parameter, and/or the pixel chunk count may be received from other input sources.

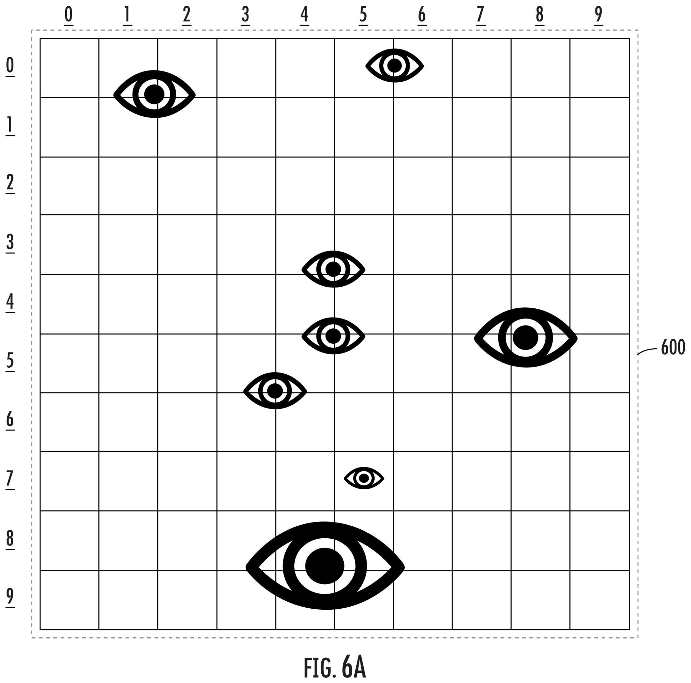

Referring now to FIG. 6A, an example image data object 600 in accordance with some embodiments of the present disclosure is illustrated. In some embodiments, the image resolution parameter associated with the example image data object 600 may be 10 pixels by 10 pixels (i.e., $s_W$ = 10 pixels, $s_H$ = 10 pixels). The pixel chunk count N may be 4 (i.e., the example image data object 600 is to be split or segmented into 4 pixel chunks). The target object may be eyes as shown in FIG. 6A, and the target object maximum pixel size parameter may be 2 pixels by 2 pixels (i.e., $t_W$ = 2 pixels, $t_H$ = 2 pixels). In such an example, the algorithm detects eyes that have seizes of 1 pixel by 2 pixels, 1 pixel by 1 pixel, 2 pixels by 1 pixel, or 2 pixels by 2 pixels. The algorithm does not detect eyes that are larger than 2 pixels by 2 pixels.

Referring back to FIG. 5A, if, at step/operation 503, the processing circuitry determines that any of the user inputs are not valid, the example method 500 proceeds to step/operation 507. At step/operation 507, in some embodiments, a processing circuitry (such as, but not limited to, the processor 202 of the apparatus 200 described in connection with at least FIG. 2) transmits input requests.

For example, the processing circuitry may determine that inputs are not valid because one or more parameters (for example, image resolution parameter, target object maximum pixel size parameter, and/or the pixel chunk count) are missing. In such an example, the processing circuitry may transmit input requests to one or more user computing devices to request users to input missing parameters.

As another example, the processing circuitry may determine that inputs are not valid because one or more parameters (for example, image resolution parameter, target object maximum pixel size parameter, and/or the pixel chunk count) exceed their corresponding parameter thresholds. In such an example, the processing circuitry may transmit input requests to one or more user computing devices to request users to input parameter(s) that are within the correspond parameter threshold(s).

If, at step/operation 503, the processing circuitry determines that the inputs are valid, the example method 500 proceeds to step/operation 509. At step/operation 509, in some embodiments, a processing circuitry (such as, but not limited to, the processor 202 of the apparatus 200 described in connection with at least FIG. 2) calculates pixel chunk width and pixel chunk height.

In some embodiments, the processing circuitry may calculate the pixel chunk width based on combining an initial pixel chunk width and an overlapping pixel portion width. For example, the initial pixel chunk width may be calculated based on the following algorithm:

$$\left(\frac{s_W}{\frac{N}{2}}\right)$$

In the above algorithm, $s_W$ corresponds to the image width (in pixels) of the image data object and N corresponds to the pixel chunk count associated with the plurality of pixel chunks. The overlapping pixel portion width may be calculated based on the following algorithm:

$$(\frac{t_w}{2})$$

In the above algorithm, $t_w$ corresponds to the target object maximum pixel width. As such, the pixel chunk width $f_W$ may be calculated based on the following algorithm:

$$f_W = \left(\frac{s_W}{\frac{N}{2}}\right) + (\frac{t_w}{2})$$

In some embodiments, the processing circuitry may calculate the pixel chunk height based on combining an initial pixel chunk height and an overlapping pixel portion height. For example, the initial pixel chunk height may be calculated based on the following algorithm:

$$\left(\frac{s_H}{\frac{N}{2}}\right)$$

In the above algorithm, $s_H$ corresponds to the image height (in pixels) of the image data object and N corresponds to the pixel chunk count associated with the plurality of pixel chunks. The overlapping pixel portion height may be calculated based on the following algorithm:

$$(\frac{t_H}{2})$$

In the above algorithm, $t_H$ corresponds to the target object maximum pixel height. As such, the pixel chunk height $f_H$ may be calculated based on the following algorithm:

$$f_H = \left(\frac{s_H}{\frac{N}{2}}\right) + (\frac{t_H}{2})$$

Referring to the example shown in FIG. 6A, the pixel chunk width $f_W$ for splitting the example image data object 600 may be calculated as follows:

$$f_W = \left(\frac{s_W}{\frac{N}{2}}\right) + \left(\frac{t_w}{2}\right) = \left(\frac{10}{\frac{4}{2}}\right) + \left(\frac{2}{2}\right) = 5 + 1 = 6$$

The pixel chunk height $f_H$ for splitting the example image data object 600 may be calculated as follows:

$$f_H = \left(\frac{s_H}{\frac{N}{2}}\right) + \left(\frac{t_H}{2}\right) = \left(\frac{10}{\frac{4}{2}}\right) + \left(\frac{2}{2}\right) = 5 + 1 = 6$$

Referring back to FIG. 5A, in some embodiments, subsequent and/or in response to step/operation 509, the example method 500 proceeds to step/operation 511. At step/operation 511, in some embodiments, a processing circuitry (such as, but not limited to, the processor 202 of the apparatus 200 described in connection with at least FIG. 2) determines whether the pixel chunk width and/or the pixel chunk height has fractional parts. For example, the processing circuitry may determine whether the pixel chunk width and/or the pixel chunk height calculated at step/operation 509 are whole number.

If, at step/operation 511, the processing circuitry determines that the pixel chunk width and/or the pixel chunk height has fractional parts, the example method 500 proceeds to step/operation 513. At step/operation 513, in some embodiments, a processing circuitry (such as, but not limited to, the processor 202 of the apparatus 200 described in connection with at least FIG. 2) calculates rounded pixel chunk width / height.

For example, the pixel chunk width calculated at step/operation 509 may not be a whole number if the target object maximum pixel width is an odd number. In such an example, the processing circuitry may round up the pixel chunk width calculated at step/operation 509. For example, if the image width $s_W$ is 10, the pixel chunk count N is 4, and the target object maximum pixel width $t_W$ is 3, the pixel chunk width $f_W$ may be calculated as follows:

$$f_W = \left(\frac{s_W}{\frac{N}{2}}\right) + \left(\frac{t_w}{2}\right) = \left(\frac{10}{\frac{4}{2}}\right) + \left(\frac{3}{2}\right) = 5 + 1.5 = 6.5 \approx 7$$

In the above example, the processing circuitry calculates the rounded pixel chunk width as 7 pixels, which is used in the subsequent image splitting algorithm.

Subsequent and/or in response to step/operation 513, in some embodiments, the example method 500 proceeds to step/operation 515.

If, at step/operation 511, the processing circuitry determines that the pixel chunk width and/or the pixel chunk height do not have fractional parts, the example method 500 proceeds to step/operation 515. At step/operation 515, in some embodiments, a processing circuitry (such as, but not limited to, the processor 202 of the apparatus 200 described in connection with at least FIG. 2) executes image splitting algorithm.

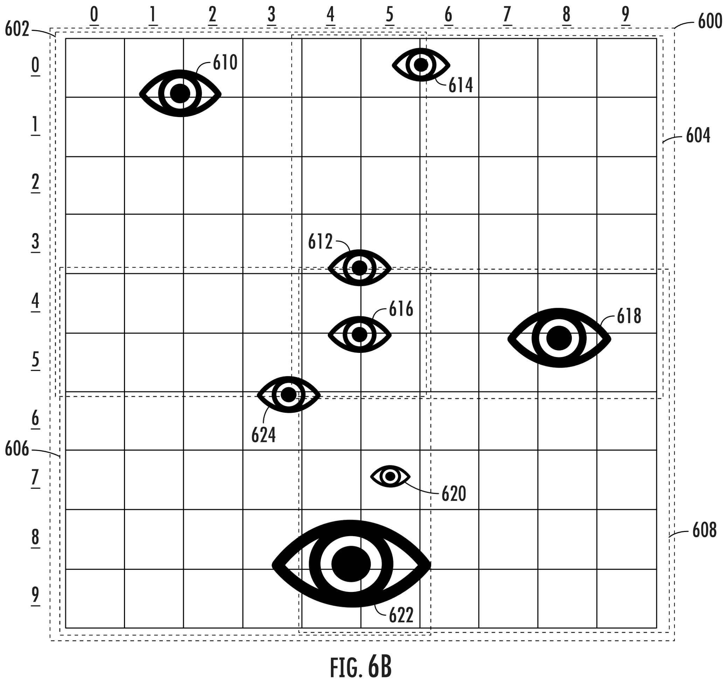

In some embodiments, the image splitting algorithm generates a plurality of pixel chunks based on the pixel chunk width and pixel chunk height that are calculated at step/operation 509 and/or step/operation 513. For example, referring now to FIG. 6B, example pixel chunks associated with the example image data object 600 are illustrated.

In the example described above in connection with step/operation 509, the example pixel chunk width associated with the image data object 600 is 6 pixels, the example pixel chunk height associated with the image data object 600 is also 6 pixels, the overlapping pixel portion width is 2 pixels, and the overlapping pixel portion height is 2 pixels. As shown in FIG. 6B, the example image data object 600 is split into 4 pixel chunks, each having a size of 6 pixels by 6 pixels. Additionally, horizontally adjacent pixel chunks share an overlapping pixel portion that has a width of 2 pixels, while vertically adjacent pixel chunks share an overlapping pixel portion that has a height of 2 pixels.

For example, the pixel chunk 602 and the pixel chunk 604 are horizontally adjacent pixel chunks that share an overlapping pixel portion with a width of 2 pixels, while the pixel chunk 606 and the pixel chunk 608 are horizontally adjacent pixel chunks that share an overlapping pixel portion with a width of 2 pixels. Additionally, the pixel chunk 602 and the pixel chunk 606 are vertically adjacent pixel chunks that share an overlapping pixel portion with a height of 2 pixels, while the pixel chunk 604 and the pixel chunk 608 are vertically adjacent pixel chunks that share an overlapping pixel portion with a height of 2 pixels.

Referring back to FIG. 5A, in some embodiments, subsequent and/or in response to step/operation 515, the example method 500 proceeds to block A, which connects FIG. 5B to FIG. 5A. Referring now to FIG. 5B, in some embodiments, subsequent and/or in response to block A (for example, step/operation 515 of FIG. 5A), the example method 500 proceeds to step/operation 517. At step/operation 517, a processing circuitry (such as, but not limited to, the processor 202 of the apparatus 200 described in connection with at least FIG. 2) parallelly executes image processing and analytic algorithms on pixel chunks.

For example, based on the pixel chunk count and/or available CPU/GPU cores, the processing circuitry may process multiple pixel chunks simultaneously to identify the number of target objects in each pixel chunk.

Referring to the example shown in FIG. 6B, the pixel chunk count is 4. In such an example, the processing circuitry may select 4 available CPU cores to execute image processing and analytic algorithms, and transmit each of the pixel chunk (i.e., the pixel chunk 602, the pixel chunk 604, the pixel chunk 606, and the pixel chunk 608) to one of the available CPU cores for processing. In some embodiments, each select CPU core may receive a pixel chunk and execute image processing and analytic algorithms on the received pixel chunk.

Referring back to FIG. 5B, in some embodiments, subsequent and/or in response to step/operation 517, the example method 500 proceeds to step/operation 519. At step/operation 519, in some embodiments, a processing circuitry (such as, but not limited to, the processor 202 of the apparatus 200 described in connection with at least FIG. 2) receives predicted individual target object counts associated with the pixel chucks.

As described above, the term "predicted individual target object count" refers to an estimated number of target objects in an example pixel chunk. In some embodiments, the processing circuitry may receive predicted individual target object counts as results from image processing and analytic algorithms that are executed at step/operation 517.

Referring to the example shown in FIG. 6B, the processing circuitry may receive a predicted individual target object count associated with the pixel chunk 602 indicating that there are three (3) target objects identified by the image processing and analytic algorithms in the pixel chunk 602. In particular, the processing circuitry may identify a target object 610, a target object 612, and a target object 616. As an example, the pixel chunk 602 may be represented as A in the following equation:

$$P(A) = 3$$

In the above equation, $P(A)$ represents a predicted individual target object count associated with the pixel chunk 602.

Continuing in the example shown in FIG. 6B, the processing circuitry may receive a predicted individual target object count associated with the pixel chunk 604 indicating that there are three (3) target objects identified by the image processing and analytic algorithms in the pixel chunk 604. In particular, the processing circuitry may identify a target object 614, a target object 612, and a target object 616. In some embodiments, the image processing and analytic algorithms do not identify the object 618 because the size of the object 618 exceeds the target object maximum pixel size parameter. As an example, the pixel chunk 604 may be represented as B in the following equation:

$$P(B) = 3$$

In the above equation, $P(B)$ represents a predicted individual target object count associated with the pixel chunk 604.

Continuing in the example shown in FIG. 6B, the processing circuitry may receive a predicted individual target object count associated with the pixel chunk 606 indicating that there are three (3) target objects identified by the image processing and analytic algorithms in the pixel chunk 606. In particular, the processing circuitry may identify a target object 616, a target object 620, and a target object 624. In some embodiments, the image processing and analytic algorithms do not identify the object 622 because the size of the object 622 exceeds the target object maximum pixel size parameter. As an example, the pixel chunk 606 may be represented as C in the following equation:

$$P(C) = 3$$

In the above equation, $P(C)$ represents a predicted individual target object count associated with the pixel chunk 606.

Continuing in the example shown in FIG. 6B, the processing circuitry may receive a predicted individual target object count associated with the pixel chunk 608 indicating that there are two (2) target objects identified by the image processing and analytic algorithms in the pixel chunk 608. In particular, the processing circuitry may identify a target object 616 and a target object 620. In some embodiments, the image processing and analytic algorithms do not identify the object 622 or the object 618 because the sizes of these objects exceed the target object maximum pixel size parameter. As an example, the pixel chunk 608 may be represented as D in the following equation:

$$P(D) = 2$$

In the above equation, $P(D)$ represents a predicted individual target object count associated with the pixel chunk 608.

Referring back to FIG. 5B, in some embodiments, subsequent and/or in response to step/operation 519, the example method 500 proceeds to step/operation 521. At step/operation 521, in some embodiments, a processing circuitry (such as, but not limited to, the processor 202 of the apparatus 200 described in connection with at least FIG. 2) executes image reconstruction algorithm on the pixel chunks.

In some embodiments, the processing circuitry executes the image reconstruction algorithm on the plurality of pixel chunks. In some embodiments, the image reconstruction algorithm may utilize pixel coordinates associated with each pixel chunk to determine overlapping pixel portions among the pixel chunks.

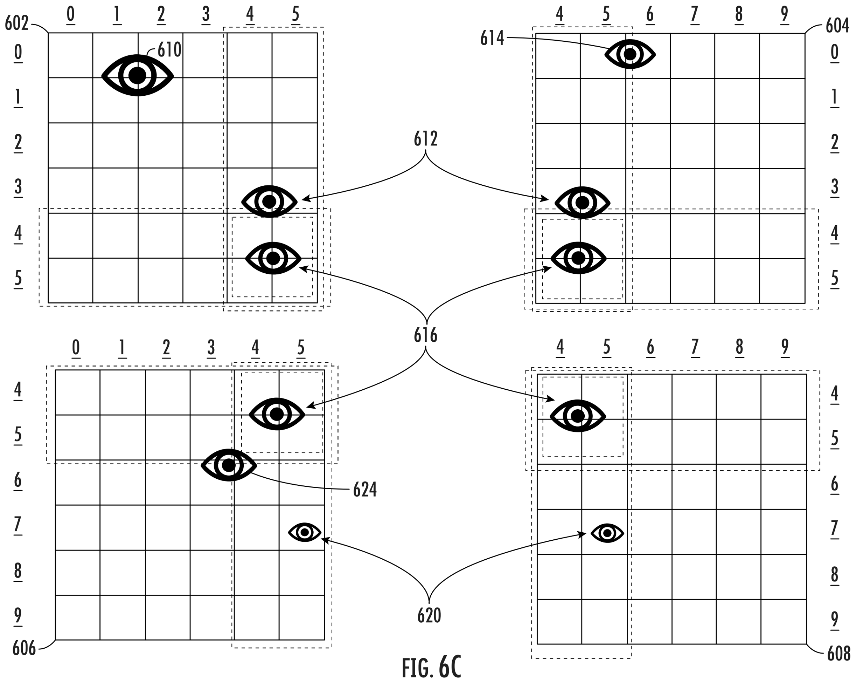

For example, referring now to FIG. 6C, the image reconstruction algorithm may determine that the pixel chunk 602 and pixel chunk 604 are horizontally adjacent pixel chunks sharing an overlapping pixel portion that includes pixel elements (0, 4), (0, 5), (1, 4), (1, 5), (2, 4), (2, 5), (3, 4), (3, 5), (4, 4), (4, 5), (5, 4), and (5, 5).

Continuing from the example in connection with FIG. 6C, the image reconstruction algorithm may determine that the pixel chunk 606 and pixel chunk 608 are horizontally adjacent pixel chunks sharing an overlapping pixel portion that includes pixel elements (4, 4), (4, 5), (5, 4), (5, 5), (6, 4), (6, 5), (7, 4), (7, 5), (8, 4), (8, 5), (9, 4), and (9, 5).

Continuing from the example in connection with FIG. 6C, the image reconstruction algorithm may determine that the pixel chunk 602 and pixel chunk 606 are vertically adjacent pixel chunks sharing an overlapping pixel portion that includes pixel elements (4, 0), (4, 1) (4, 2) (4, 3), (4, 4), (4, 5), (5, 0), (5, 1) (5, 2) (5, 3), (5, 4), and (5, 5).

Continuing from the example in connection with FIG. 6C, the image reconstruction algorithm may determine that the pixel chunk 604 and pixel chunk 608 are vertically adjacent pixel chunks sharing an overlapping pixel portion that includes pixel elements (4, 4), (4, 5) (4, 6) (4, 7), (4, 8), (4, 9), (5, 4), (5, 5) (5, 6) (5, 7), (5, 8), and (5, 9).

Continuing from the example in connection with FIG. 6C, the image reconstruction algorithm may determine that pixel chunk 602, pixel chunk 604, pixel chunk 606 and pixel chunk 608 are adjacent pixel chunks sharing an overlapping pixel portion that includes pixel elements (4, 4), (4, 5), (5, 4), and (5, 5).

Referring back to FIG. 5B, in some embodiments, subsequent and/or in response to step/operation 521, the example method 500 proceeds to step/operation 523. At step/operation 523, in some embodiments, a processing circuitry (such as, but not limited to, the processor 202 of the apparatus 200 described in connection with at least FIG. 2) executes reductant detection algorithms based on the predicted individual target object counts.

In some embodiments, the reductant detection algorithms may identify a count of target objects in the overlapping pixel portions between adjacent pixel chunks.

For example, referring now to FIG. 6C, the reductant detection algorithms may determine that there are two (2) target objects (i.e., the target object 612 and the target object 616) in the overlapping pixel portion shared between the pixel chunk 602 and the pixel chunk 604. As an example, the pixel chunk 602 may be represented as A in the following equations, and the pixel chunk 604 may be represented as B in the following equations. In such an example, the reductant detection algorithms may determine:

$$P(A \cap B) = 2$$

In the above equation, $P(A \cap B)$ represents the number of target objects in the overlapping portion between the pixel chunk 602 and the pixel chunk 604.

Continuing in the example shown in FIG. 6C, the reductant detection algorithms may determine that there is one (1) target object (i.e., the target object 616) in the overlapping pixel portion shared between the pixel chunk 602 and the pixel chunk 606. As an example, the pixel chunk 602 may be represented as A in the following equations, and the pixel chunk 606 may be represented as C in the following equations. In such an example, the reductant detection algorithms may determine:

$$P(A \cap C) = 1$$

In the above equation, $P(A \cap C)$ represents the number of target objects in the overlapping portion between the pixel chunk 602 and the pixel chunk 606.

Continuing in the example shown in FIG. 6C, the reductant detection algorithms may determine that there is one (1) target object (i.e., the target object 616) in the overlapping pixel portion shared between the pixel chunk 604 and the pixel chunk 608. As an example, the pixel chunk 604 may be represented as B in the following equations, and the pixel chunk 608 may be represented as D in the following equations. In such an example, the reductant detection algorithms may determine:

$$P(B \cap D) = 1$$

In the above equation, $P(B \cap D)$ represents the number of target objects in the overlapping portion between the pixel chunk 604 and the pixel chunk 608.

Continuing in the example shown in FIG. 6C, the reductant detection algorithms may determine that there are two (2) target objects (i.e., the target object 616 and target object 620) in the overlapping pixel portion shared between the pixel chunk 606 and the pixel chunk 608. As an example, the pixel chunk 606 may be represented as C in the following equations, and the pixel chunk 608 may be represented as D in the following equations. In such an example, the reductant detection algorithms may determine:

$$P(C \cap D) = 2$$

In the above equation, $P(C \cap D)$ represents the number of target objects in the overlapping portion between the pixel chunk 606 and the pixel chunk 608.

Continuing in the example shown in FIG. 6C, the reductant detection algorithms may determine that there is one (1) target object (i.e., the target object 616) in the overlapping pixel portion shared between the pixel chunk 602, the pixel chunk 604, the pixel chunk 606, and the pixel chunk 608. As an example, the pixel chunk 602 may be represented as A in the following equations, the pixel chunk 604 may be represented as B in the following equations, the pixel chunk 606 may be represented as C in the following equations, and the pixel chunk 608 may be represented as D in the following equations. In such an example, the reductant detection algorithms may determine:

$$P(A \cap B \cap C \cap D) = 1$$

In the above equation, $P(A \cap B \cap C \cap D)$ represents the number of target objects in the overlapping portion between the pixel chunk 602, the pixel chunk 604, the pixel chunk 606, and the pixel chunk 608.

Referring back to FIG. 5B, in some embodiments, subsequent and/or in response to step/operation 523, the example method 500 proceeds to step/operation 525. At step/operation 525, in some embodiments, a processing circuitry (such as, but not limited to, the processor 202 of the apparatus 200 described in connection with at least FIG. 2) generates a predicted total target object count.

In some embodiments, the processing circuitry may generate the predicted total target object count based on the following equation:

$$P(A \cup B \cup C \cup D)$$
$$= P(A) + P(B) + P(C) + P(D) - P(A \cap B) - P(A \cap C) - P(B \cap D)$$
$$- P(C \cap D) + P(A \cap B \cap C \cap D)$$

In the above equation, $P(A \cup B \cup C \cup D)$ represents the predicted total target object count. Continuing from the example shown in FIG. 6A to FIG. 6C, the processing circuitry may calculate the predicted total target object count as follows:

$$P(A \cup B \cup C \cup D)$$
$$= P(A) + P(B) + P(C) + P(D) - P(A \cap B) - P(A \cap C) - P(B \cap D)$$
$$- P(C \cap D) + P(A \cap B \cap C \cap D)$$
$$= 3 + 3 + 3 + 2 - 2 - 1 - 1 - 2 + 1 = 6$$

As shown in FIG. 6B and described above, there are six (6) target objects (that do not exceed the target object maximum pixel size parameter) in the example image data object 600. As illustrated in the above example, various embodiments of the present application provide technical improvements and benefits such as, but not limited to, improved accuracy in detecting the target objects in the image data object.

Referring back to FIG. 5B, subsequent and/or in response to step/operation 525, the example method 500 proceeds to step/operation 527 and ends.

Additional Implementation Details

Although example processing systems have been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer-readable storage medium for execution by, or to control the operation of, information/data processing apparatus. A computer-readable storage medium can be, or be included in, a computer-readable storage device, a computer-readable storage substrate, a random or serial access memory array or device, or a combination of one or more of them. The computer-readable storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (Application Specific Integrated Circuit). The apparatus can also include, in addition to hardware, code that creates an execution environment for the computer program in question, e.g., code that constitutes processor firmware, a protocol stack, a data object repository management system, an operating system, a cross-platform runtime environment, a virtual machine, or a combination of one or more of them. The apparatus and execution environment can realize various different computing model infrastructures, such as web services, distributed computing, and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory, a random-access memory, or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer needs not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., an LCD monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's user computing device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a user computing device having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML (Hypertext Markup Language) page) to a user computing device (e.g., for purposes of displaying information/data to and receiving user input from a user interacting with the user computing device). Information/data generated at the user computing device (e.g., a result of the user interaction) can be received from the user computing device at the server.

While this specification contains many specific implementation details, these should not be construed as limitations on the scope of any disclosures or of what may be claimed, but rather as description of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results, unless described otherwise. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results, unless described otherwise. In certain implementations, multitasking and parallel processing may be advantageous.

Many modifications and other embodiments of the disclosures set forth herein will come to mind to one skilled in the art to which these disclosures pertain having the benefit of the teachings presented in the foregoing description and the associated drawings. Therefore, it is to be understood that the disclosures are not to be limited to the specific embodiments disclosed and that modifications and other embodiments are intended to be included within the scope of the appended claims. Although specific terms are employed herein, they are used in a generic and descriptive sense only and not for purposes of limitation, unless described otherwise.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

**Claims**

1. An apparatus comprising at least one processor and at least one non-transitory memory comprising program code, wherein the at least one non-transitory memory and the program code are configured to, with the at least one processor, cause the apparatus to at least:

   receive an image data object and a target object maximum pixel size parameter associated with a target object;
   generate a plurality of pixel chunks based at least in part on the image data object and the target object maximum pixel size parameter;
   generate a plurality of predicted individual target object counts based at least in part on parallel processing of the plurality of pixel chunks; and
   generate a predicted total target object count associated with the target object based at least in part on the plurality of predicted individual target object counts.

2. The apparatus of claim 1, wherein the target object maximum pixel size parameter defines a target object maximum pixel width and a target object maximum pixel height.

3. The apparatus of claim 2, wherein, prior to generating the plurality of pixel chunks, the at least one non-transitory memory and the program code are configured to, with the at least one processor, cause the apparatus to determine a pixel chunk count associated with the plurality of pixel chunks.

4. The apparatus of claim 3, wherein the at least one non-transitory memory and the program code are configured to, with the at least one processor, cause the apparatus to:
determine a pixel chunk width associated with the plurality of pixel chunks based at least in part on the pixel chunk count and the target object maximum pixel width.

5. The apparatus of claim 3, wherein the at least one non-transitory memory and the program code are configured to, with the at least one processor, cause the apparatus to:
determine a pixel chunk height associated with the plurality of pixel chunks based at least in part on the pixel chunk count and the target object maximum pixel height.

6. The apparatus of claim 2, wherein the plurality of pixel chunks comprises horizontally adjacent pixel chunks sharing an overlapping pixel portion, wherein an overlapping pixel portion width of the overlapping pixel portion is determined based on the target object maximum pixel width.

7. The apparatus of claim 2, wherein the plurality of pixel chunks comprises vertically adjacent pixel chunks sharing an overlapping pixel portion, wherein an overlapping pixel portion height of the overlapping pixel portion is determined based on the target object maximum pixel height.

8. A computer-implemented method comprising:

receiving, by a processor, an image data object and a target object maximum pixel size parameter associated with a target object;
generating, by the processor, a plurality of pixel chunks based at least in part on the image data object and the target object maximum pixel size parameter;
generating, by the processor, a plurality of predicted individual target object counts based at least in part on parallel processing of the plurality of pixel chunks; and
generating, by the processor, a predicted total target object count associated with the target object based at least in part on the plurality of predicted individual target object counts.

9. The computer-implemented method of claim 8, wherein the target object maximum pixel size parameter defines a target object maximum pixel width and a target object maximum pixel height.

10. The computer-implemented method of claim 9, wherein, prior to generating the plurality of pixel chunks, the computer-implemented method comprises determining a pixel chunk count associated with the plurality of pixel chunks.

11. The computer-implemented method of claim 10, further comprising:
determining, by the processor, a pixel chunk width associated with the plurality of pixel chunks based at least in part on the pixel chunk count and the target object maximum pixel width.

12. The computer-implemented method of claim 10, further comprising:
determining, by the processor, a pixel chunk height associated with the plurality of pixel chunks based at least in part on the pixel chunk count and the target object maximum pixel height.

13. The computer-implemented method of claim 9, wherein the plurality of pixel chunks comprises horizontally adjacent pixel chunks sharing an overlapping pixel portion, wherein an overlapping pixel portion width of the overlapping pixel portion is determined based on the target object maximum pixel width.

14. The computer-implemented method of claim 9, wherein the plurality of pixel chunks comprises vertically adjacent pixel chunks sharing an overlapping pixel portion, wherein an overlapping pixel portion height of the overlapping pixel portion is determined based on the target object maximum pixel height.

FIG. 1

200

204 MEMORY

202 PROCESSOR

208 COMMUNICATIONS CIRCUITRY

206 INPUT/OUTPUT CIRCUITRY

210 DISPLAY

FIG. 2

<u>300</u>

```
          ┌─────────┐
          │  START  │──── 301
          └─────────┘
               │
               ▼
┌───────────────────────────────┐
│ RECEIVE AN IMAGE DATA OBJECT   │
│ AND A TARGET OBJECT MAXIMUM    │──── 303
│ PIXEL SIZE PARAMETER           │
└───────────────────────────────┘
               │
               ▼
┌───────────────────────────────┐
│ GENERATE A PLURALITY OF        │──── 305
│ PIXEL CHUNKS                   │
└───────────────────────────────┘
               │
               ▼
┌───────────────────────────────┐
│ GENERATE A PLURALITY OF        │
│ PREDICTED INDIVIDUAL TARGET    │──── 307
│ OBJECT COUNTS                  │
└───────────────────────────────┘
               │
               ▼
┌───────────────────────────────┐
│ GENERATE A PREDICTED TOTAL     │
│ TARGET OBJECT COUNT            │──── 309
│ ASSOCIATED WITH THE TARGET     │
│ OBJECT                         │
└───────────────────────────────┘
               │
               ▼
          ┌─────────┐
          │   END   │──── 311
          └─────────┘
```

FIG. 3

|   | 0 | 1 | 2 | 3 | 4 | 5 | 6 | 7 | 8 | 9 |
|---|---|---|---|---|---|---|---|---|---|---|
| 0 | (0,0) | (1,0) | (2,0) | (3,0) | (4,0) | (5,0) | (6,0) | (7,0) | (8,0) | (9,0) |
| 1 | (0,1) | (1,1) | (2,1) | (3,1) | (4,1) | (5,1) | (6,1) | (7,1) | (8,1) | (9,1) |
| 2 | (0,2) | (1,2) | (2,2) | (3,2) | (4,2) | (5,2) | (6,2) | (7,2) | (8,2) | (9,2) |
| 3 | (0,3) | (1,3) | (2,3) | (3,3) | (4,3) | (5,3) | (6,3) | (7,3) | (8,3) | (9,3) |
| 4 | (0,4) | (1,4) | (2,4) | (3,4) | (4,4) | (5,4) | (6,4) | (7,4) | (8,4) | (9,4) |
| 5 | (0,5) | (1,5) | (2,5 | (3,5) | (4,5) | (5,5) | (6,5) | (7,5) | (8,5) | (9,5) |
| 6 | (0,6) | (1,6) | (2,6) | (3,6) | (4,6) | (5,6) | (6,6) | (7,6) | (8,6) | (9,6) |
| 7 | (0,7) | (1,7) | (2,7) | (3,7) | (4,7) | (5,7) | (6,7) | (7,7) | (8,7) | (9,7) |
| 8 | (0,8) | (1,8) | (2,8) | (3,8) | (4,8) | (5,8) | (6,8) | (7,8) | (8,8) | (9,8) |
| 9 | (0,9) | (1,9) | (2,9) | (3,9) | (4,9) | (5,9) | (6,9) | (7,9) | (8,9) | (9,9) |

400

FIG. 4A

FIG. 4B

EP 4 776 220 A1

402

| (0,0) | (1,0) | (2,0) | (3,0) | (4,0) | (5,0) |
|---|---|---|---|---|---|
| (0,1) | (1,1) | (2,1) | (3,1) | (4,1) | (5,1) |
| (0,2) | (1,2) | (2,2) | (3,2) | (4,2) | (5,2) |
| (0,3) | (1,3) | (2,3) | (3,3) | (4,3) | (5,3) |
| (0,4) | (1,4) | (2,4) | (3,4) | (4,4) | (5,4) |
| (0,5) | (1,5) | (2,5 | (3,5) | (4,5) | (5,5) |

404

| (4,0) | (5,0) | (6,0) | (7,0) | (8,0) | (9,0) |
|---|---|---|---|---|---|
| (4,1) | (5,1) | (6,1) | (7,1) | (8,1) | (9,1) |
| 4,2) | (5,2) | (6,2) | (7,2) | (8,2) | (9,2) |
| (4,3) | (5,3) | (6,3) | (7,3) | (8,3) | (9,3) |
| (4,4) | (5,4) | (6,4) | (7,4) | (8,4) | (9,4) |
| (4,5) | (5,5) | (6,5 | (7,5) | (8,5) | (9,5) |

410

400

414

406

| (0,4) | (1,4) | (2,4) | (3,4) | (4,4) | (5,4) |
|---|---|---|---|---|---|
| (0,5) | (1,5) | (2,5) | (3,5) | (4,5) | (5,5) |
| (0,6) | (1,6) | (2,6) | (3,6) | (4,6) | (5,6) |
| (0,7) | (1,7) | (2,7) | (3,7) | (4,7) | (5,7) |
| (0,8) | (1,8) | (2,8) | (3,8) | (4,8) | (5,8) |
| (0,9) | (1,9) | (2,9 | (3,9) | (4,9) | (5,9) |

416

408

| (4,4) | (5,4) | (6,4) | (7,4) | (8,4) | (9,4) |
|---|---|---|---|---|---|
| (4,5) | (5,5) | (6,5) | (7,5) | (8,5) | (9,5) |
| 4,6) | (5,6) | (6,6) | (7,6) | (8,6) | (9,6) |
| (4,7) | (5,7) | (6,7) | (7,7) | (8,7) | (9,7) |
| (4,8) | (5,8) | (6,8) | (7,8) | (8,8) | (9,8) |
| (4,9) | (5,9) | (6,9 | (7,9) | (8,9) | (9,9) |

418

412

FIG. 4C

500

```
                              ┌──────────┐
                              │  START   │────── 501
                              └──────────┘
                                    │
        505                         │                    ┌──────────────────────────┐
                                    ▼              507 ──│  TRANSMIT INPUT REQUEST  │
                              503                        └──────────────────────────┘
                         ╱──────────────╲                            ▲
   ┌────┐              ╱                  ╲                           │
   │    │─────────────▶     INPUTS VALID?   ────────── NO ───────────┘
   │    │              ╲                  ╱
   └────┘                ╲──────────────╱
                                    │
                                    ▼
                    ┌───────────────────────────────┐
                    │  CALCULATE PIXEL CHUNK         │
                    │  WIDTH AND PIXEL CHUCK         │──── 509
                    │  HEIGHT                        │
                    └───────────────────────────────┘
                                    │
                                    ▼             511
                         ╱──────────────────╲
              YES       ╱   PIXEL CHUNK       ╲
         ┌────────────── WIDTH/HEIGHT HAVING FRACTIONAL
         │              ╲     PART?           ╱
         │               ╲──────────────────╱
         │                         │
         ▼                        NO
   ┌──────────────────────┐       ▼
   │ CALCULATE ROUNDED    │   ┌──────────────────────┐
   │ PIXEL CHUNK          │──▶│ EXECUTE IMAGE         │──── 515
   │ WIDTH/HEIGHT         │   │ SPLITTING ALGORITHM   │
   └──────────────────────┘   └──────────────────────┘
        513                            │
                                       ▼
                                   ┌───────┐
                                   │   A   │
                                   └───────┘
```

FIG. 5A

```
         ┌───┐
         │ A │
         └─┬─┘
           ▼
```

PARALLELLY EXECUTE IMAGE PROCESSING AND ANALYTICS ALGORITHMS ON PIXEL CHUNKS — 517

RECEIVE PREDICTED INDIVIDUAL TARGET OBJECT COUNTS ASSOCIATED WITH THE PIXEL CHUCKS — 519

EXECUTE IMAGE RECONSTRUCTION ALGORITHM ON THE PIXEL CHUNKS — 521

EXECUTE REDUCTANT DETECTION ALGORITHMS BASED ON THE PREDICTED OBJECT COUNTS — 523

GENERATE A PREDICTED TOTAL OBJECT COURTS — 525

END — 527

FIG. 5B

FIG. 6A

FIG. 6B

FIG. 6C

Europäisches
Patentamt

European
Patent Office

Office européen
des brevets

# EUROPEAN SEARCH REPORT

**Application Number**

EP 25 22 7762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 097 121 B (ZHEJIANG SHUANGYUAN TECH CO LTD) 28 June 2024 (2024-06-28) * paragraphs [0022], [0034] - [0037], [0041], [0066] - [0067], [0110] - [0112]; figures 4,7 * ----- | 1-14 | INV. G06T7/00 |
| A | US 2018/285656 A1 (YANO KOTARO [JP] ET AL) 4 October 2018 (2018-10-04) * paragraphs [0027] - [0029], [0039] - [0040]; claim 1; figures 2,3,5 * ----- | 1-14 | |
| A | US 2022/215206 A1 (LIN ZHAO-YUAN [TW] ET AL) 7 July 2022 (2022-07-07) * paragraphs [0030] - [0036], [0056] - [0060]; claims 1-4; figures 2,4,6 * ----- | 1-14 | |

**TECHNICAL FIELDS SEARCHED (IPC)**

G06T

The present search report has been drawn up for all claims

| Place of search | Date of completion of the search | Examiner |
|---|---|---|
| Munich | 7 April 2026 | Capone, Luigino |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 7762

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2026

| Patent document cited in search report | | Publication date | Patent family member(s) | | Publication date |
|---|---|---|---|---|---|
| CN 118097121 | B | 28-06-2024 | NONE | | |
| US 2018285656 | A1 | 04-10-2018 | DE 102018107823 | A1 | 04-10-2018 |
| | | | JP 6914699 | B2 | 04-08-2021 |
| | | | JP 2018180619 | A | 15-11-2018 |
| | | | US 2018285656 | A1 | 04-10-2018 |
| US 2022215206 | A1 | 07-07-2022 | CN 114723655 | A | 08-07-2022 |
| | | | TW 202230219 | A | 01-08-2022 |
| | | | US 2022215206 | A1 | 07-07-2022 |

EPO FORM P0459

For more details about this annex : see Official Journal of the European Patent Office, No. 12/82